# EUROPEAN PATENT APPLICATION

(11) **EP 2 860 054 A1**
(43) Date of publication of application: **15.04.2015**
(21) Application number: 14174092.8
(22) Date of filing: 26.06.2014
(51) Int. Cl.: B60K 6/46, B60W 10/06, B60W 10/08, B60W 20/00, B60L 11/12, B60K 7/00, B60W 50/00

(54) **Hybrid vehicle for transporting goods in a port**

(30) Priority: 26.06.2013 IT CO20130027
(71) Applicant: Massive S.r.l., 17047 Vado Ligure (IT)
(72) Inventor: Porta, Guido, 16011 Arenzano (IT); Mistrangelo, Doriano, 17028 Bergeggi (IT)
(74) Representative: De Ros, Alberto

(57) **Abstract**

The vehicle is of the type adapted to couple to, lift in part from one side and tow a trolley for transporting goods in a port, is provided with tyres and comprises: an internal combustion engine (301) provided with a rotating shaft, an electric generator (302) connected to said rotating shaft and adapted to generate at an output electric energy as a function of the rotation of said rotating shaft, an electric accumulator (303) having terminals connected to said output, at least one electric motor (304) connected to said terminals and provided with a rotating shaft connected to at least one of said tyres; the vehicle further comprising an electronic control unit (305) connected to said internal combustion engine (301), to said electric generator (302), to said electric accumulator (303), and to said at least one electric motor (304); the electronic control unit (305) is adapted to electronically control: the rotation of said internal combustion engine (301), the electric energy supplied by said electric generator (302) to said electric accumulator (303), the electric energy supplied by said electric accumulator (303) to said at least one electric motor (304).

## Description

### Field of the invention

The present invention relates to a hybrid vehicle for transporting goods in a port, precisely a vehicle of the type adapted to couple to, lift in part from one side and tow a trolley for transporting goods in a port, and provided with tyres.

### State of the art

"Hybrid" vehicles have been known for many years; in particular, "hybrid" vehicles are also known of the type comprising an internal combustion engine, an electric generator connected to the internal combustion engine, an electric accumulator connected to the electric generator, an electric motor connected to the electric accumulator and to the wheels of the vehicle.

Nevertheless, the practical application of "hybrid" vehicles for towing goods is rather limited.

The present Applicant has not only thought of designing a hybrid "tractor", but of designing it in such a manner that it be specifically adapted to being used in and for ports.

### Summary

The present Applicant has therefore considered the peculiarities of this application of hybrid vehicles.

As is known, "tractors used in ports" move on tyres and are adapted to couple to, lift in part from one side and tow trolleys for transporting goods; such a "tractor used in ports" tows a large and heavy trolley (at times more than one trolley) and does not directly transport any goods; in this sense, they are similar to road tractors of lorries even if such tractors are designed to always cooperate with the same type and dimension of trolley, while "tractors used in ports" are to be capable of adapting to various types and dimensions of trolley.

Nevertheless, "tractors used in ports" often remain stopped while waiting to be hooked to the trolley that is to be towed and/or while waiting for the trolley to be loaded or unloaded for example by a crane.

At times, tractors used in ports require moving inside indoor places, in particular warehouses and/or ship holds.

The routes travelled by tractors in ports are limited and, for the most part of the time, flat; furthermore, such routes are at least in part foreseeable and therefore are modelable.

In light of these considerations, the present Applicant has invented the vehicle having the features explained in the appended claims which form an integral part of the present description.

### List of the drawings

The present invention will be more apparent from the detailed description below, to be considered together with the accompanying drawings herein, in which:
Fig. 1 is a perspective view of a generic tractor used in ports,
Fig. 2 is a top view of a port,
Fig. 3 is a simplified and partial block diagram of a "tractor used in ports" according to the present invention, and
Fig. 4 is a highly diagrammatical simplified and partial side view of a "tractor used in ports" according to the present invention.

Both this description and these drawings are only to be considered for illustrative purposes and therefore are non-limiting.

### Detailed description

As is easy to understand, there are many methods for implementing the present invention into practice. Below is a detailed description of a single embodiment highlighting, here and there, some of the many possible variants; naturally, the specific description of the embodiment is non-limiting of the present invention which, instead, is defined by the claims herein appended.

The indications below refer generally to the forward running of the vehicle described, which corresponds to the majority of the running time of the vehicle; in case of reverse running, the vehicle pushes the trolley instead of towing it.

As already indicated, the present invention relates mainly to a vehicle of the type adapted to couple to, lift in part from one side and tow a trolley for transporting goods in a port, and provided with tyres, which may be called "tractor used in ports". However, it is not excluded that the technical teachings of the present invention may also find application in other types of hybrid "tractors" for transporting goods.

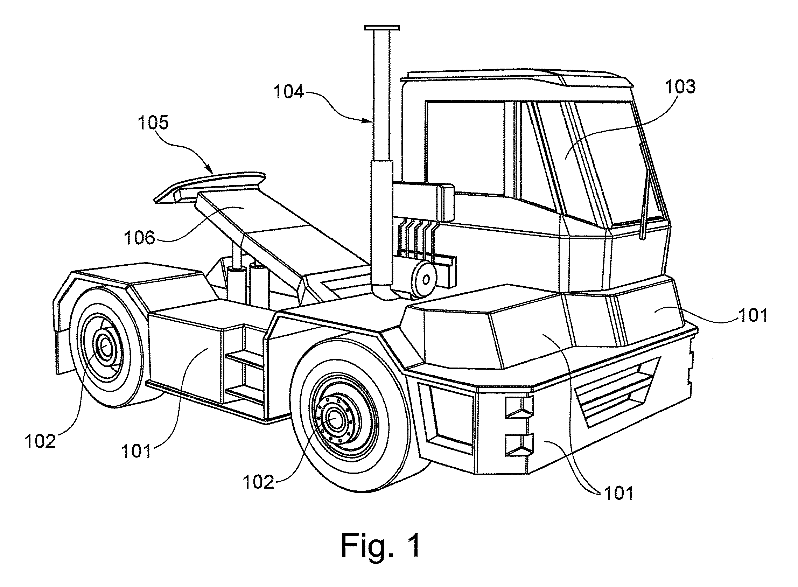

Fig. 1 shows a standard "tractor used in ports"; such a figure shows, among other things, a frame with bodywork 101, wheels 102, an operating and control cabin 103, and exhaust pipe 104 of an internal combustion engine (contained within the bodywork), a fifth wheel coupling 105 mounted on a movable arm 106; as is known, the coupling and lifting of the trolley occur due to the fifth wheel coupling 105 mounted on the movable arm 106; the mobility of arm 106 and the articulation between fifth wheel coupling 105 and arm 106 allows the vehicle to be adapted to various types and dimensions of trolleys.

The present invention does not refer to vehicle components visible from the outside, but to the components realising the propulsion of the vehicle; therefore, an embodiment of the vehicle according to the present invention could also have the external appearance shown in fig. 1.

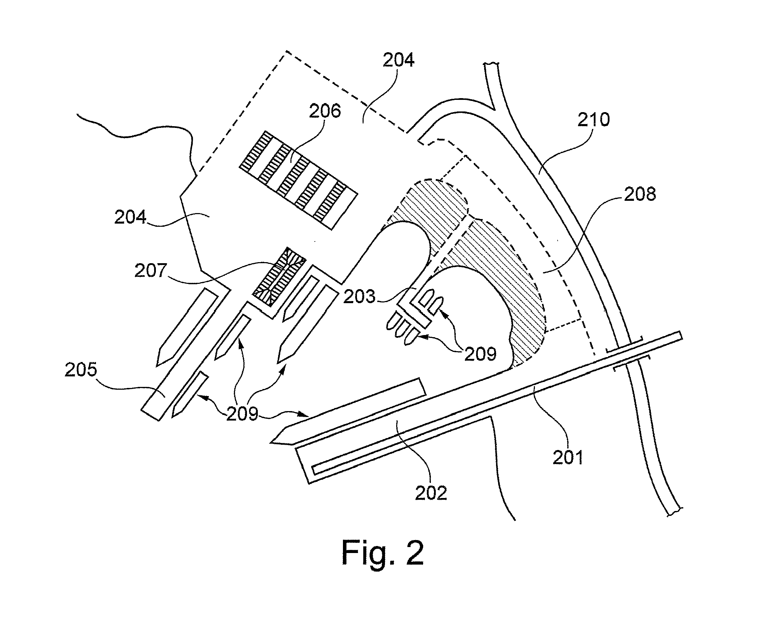

Fig. 2 shows an example of port; naturally, ports may be very different from each other and also very different from the one shown in fig. 2.

Such a figure shows a railway track 201, a first elongated platform 202 adjacent to a stretch of the railway track, a second "L"-shaped platform 203, a parking area 204, a third elongated platform 205 protruding from the parking area, a warehouse 206, an office building 207, a transit area 208, a plurality of ships and boats 209, a road 210 connecting the port; the platforms 202 and 205 and also area 204 are flat and are substantially at a first same level; platform 203 and also area 208 are flat and are substantially at a second same level; the first level is slightly higher than the second level (for example, 2 m higher) and therefore, if a vehicle moves for example from platform 202 to area 204 or inside warehouse 206 or to platform 205 or from inside the ship adjacent to platform 202 to inside warehouse 206 (these are four possible routes of the vehicle inside the area), by travelling through area 208, it encounters first a slight descent and then a slight ascent; instead, when a vehicle moves, for example, from platform 205 to area 204 or inside warehouse 206, the route is all flat.

Generally, a vehicle according to the present invention comprises:
- an internal combustion engine 301,
- an electric generator 302,
- an electric accumulator 303,
- at least one electric motor 304,
- an electronic control unit 305.

The heart of the innovative solution according to the present invention is the electronic control unit and its intelligent control abilities.

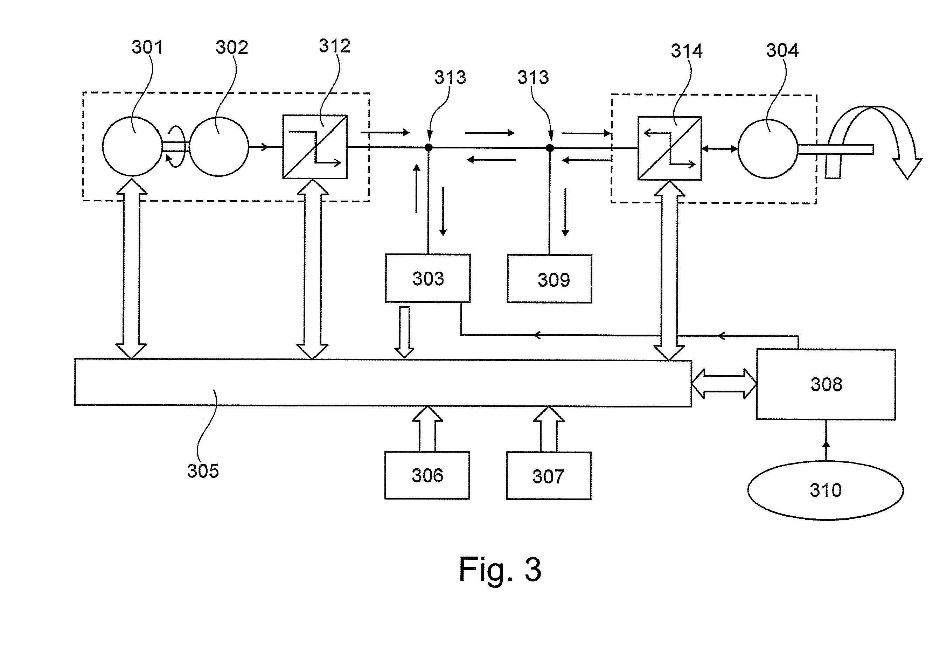

The numeric references indicated above refer to the embodiment shown in fig. 3.

Such a figure also shows an accelerator pedal 306, a brake pedal 307 and an electric charger 308; naturally, the accelerator pedal and the brake pedal are also present in vehicles prior to the present invention. However, for the purposes of the present invention, the connection between accelerator pedal and electronic control unit is very standard, the connection between brake pedal and electronic control unit is standard, the connection between electric charger and electronic control unit is possible. In fact, according to how the present invention is made, the electric charger could be very simple or be absent and therefore a control by the electronic control unit would not be required; it is worth noting that all or part of the electric functions of the electric charger could be realised by a device external to the vehicle.

Such a figure also shows an electric use 309 which conceptually represents all possible electric uses of the vehicle, for example the internal lighting devices, the external lighting devices (in particular the head lamps), the automatic temperature control of the operating and control cabin, ....

The internal combustion engine 301 (e.g. a diesel engine) is provided with a rotating shaft; the electric generator 302 (e.g. an alternator) is connected to the rotating shaft and is adapted to generate at an output electric energy as a function of the rotation of the rotating shaft; the electric accumulator 303 has terminals connected to the output of the electric generator 302, the electric motor 304 (e.g. an alternate current engine) is connected to the terminals of the electric accumulator 303 and is provided with a rotating shaft connected to at least one of the tyres of the vehicle; the electric charger 308 has an input connected to an electric tap 310, which is typically associated with the bodywork of the vehicle, and an output connected to the electric accumulator 303 (in this figure, the connection of the electric accumulator 303 with node 313 and the one with the electric charger 308 are shown as separate to clarify that the source of electric energy external to the vehicle may be used only for charging the accumulator and therefore not directly for the propulsion of the vehicle or directly for the electric uses of the vehicle).

The electronic control unit 305 is connected to the internal combustion engine 301, to the electric generator 302, to the electric accumulator 303, to the electric motor 304,
to the electric charger 308, and also to the accelerator pedal 306 and to the brake pedal 307; as will be better understood below, the electronic control unit 305 is connected to these components of the vehicle by means of electric-electronic circuits associated with these components.

Fig. 3 highlights a node 313 which is very important for the purposes of balancing the electric energy generated, consumed and accumulated in the vehicle; in such a figure, the same reference 313 is associated with two nodes because the difference between the first node and the second node is not important for the purposes of the present invention. The electric generator 302 is associated with a first electric converter 312 which connects the output of generator 302 with node 313. Furthermore, the electric motor 304 is associated with a second electric converter 314 which connects the input of motor 304 with node 313. Finally, both the electric accumulator 303 and the electric use 309 are connected to node 313.

The first electric converter 312 is of the uni-directional type, that is adapted to transfer the electric energy from the electric generator 302 to node 313; according to this embodiment of the invention, converter 312 converts alternate current into direct current which may be used, preferably directly, by the electric accumulator 303 and/or by the electric use 309 and/or by the second electric converter 314, according to the conditions.

The second electric converter 314 is of the bidirectional type, that is adapted to transfer the electric energy from node 313 to the electric motor 304 or from the electric motor 304 to node 313 according to the conditions of the vehicle (for example, flat movement, uphill movement, downhill movement, braking, ...); such a type of converter is useful because the electric motor 304 is adapted to operate also as an electric generator; according to this embodiment of the invention, converter 314 converts direct current from node 313 into alternate current which may be used, preferably directly, by the electric motor 304 (in alternate current) or alternate current from the electric motor 304 (which operates as an alternator) into direct current which may be used, preferably directly, by the electric accumulator 303 and/or by the electric use 309, according to the conditions.

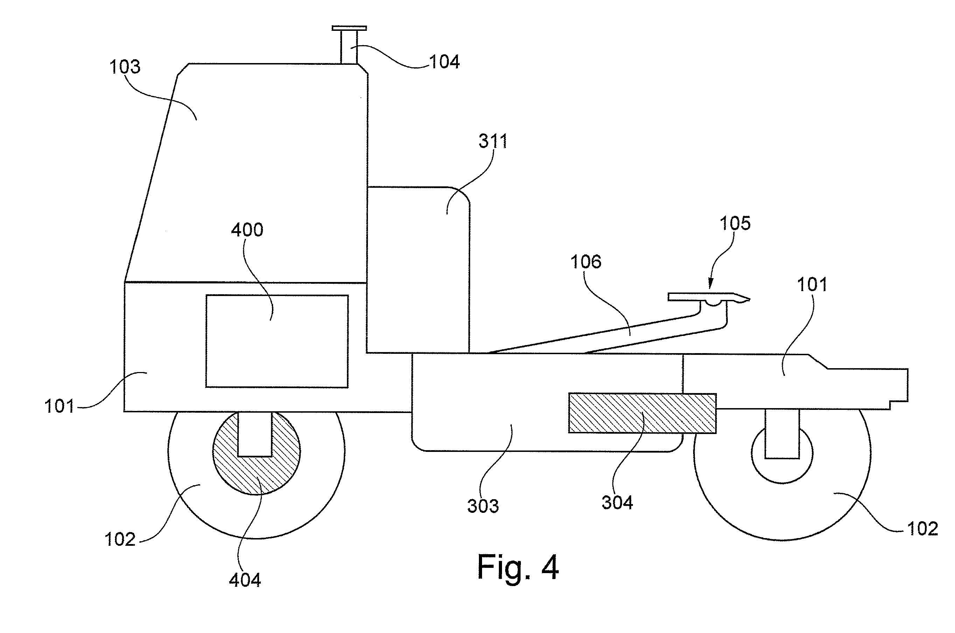

Fig. 4 indicatively shows a standard dislocation of the components in fig. 3 in a "tractor used in ports" like the one in fig. 1.

Such a figure shows the frame with bodywork 101, two of the four wheels 102, the operating and control cabin 103, the exhaust pipe 104 of the internal combustion engine 301, a fuel tank 311 of the internal combustion engine 301, the fifth wheel coupling 105 and the movable arm 106.

The fuel tank 311 is positioned on the frame and behind the operating and control cabin.

The electric accumulator 303 is positioned between the front axle and the rear axle, at the level of the frame and therefore substantially level with the wheels 102; such an accumulator could also be divided into two equal sections, one on the right part of the vehicle and one on the left part of the vehicle.

The electric motor 304 is connected to both rear wheels by means of suitable drive means (not shown in the figure); it is at the rear, preferably close to the rear wheels, for example in the middle of the rear axle, for example with the transverse shaft thereof at the rear axle.

There are also two electric motors 404, one for each of the front wheels; they are preferably very close to the wheels, respectively; for example, each wheel may be mounted directly on the shaft of each motor.

Motor 304 and the two motors 404 are connected to the output of a converter similar to converter 314. However, to optimize the traction of a vehicle according to the present invention, equipped with one or more electric motors, like the "tractor used in ports" in fig. 4, each of the motors may advantageously be equipped with a speed controller connected to or integrated within the electronic control unit.

Block 400 indicates the assembly of:
- internal combustion engine 301,
- electric generator 302,
- electronic control unit 305,
- first electric converter 312,
- node 313,
- second electric converter 314,
- electric charger 308 (when fitted).

The components in block 400 are grouped together and are in the front part of the vehicle, typically above the front axle (partly slightly advanced and partly slightly back), typically partly below the operating and control cabin 103 and partly beside the operating and control cabin 103; from fig. 1 and fig. 4, it is well understood how the frame with bodywork 101 may contain the components of block 400 at the front.

According to this embodiment of the invention in fig. 3, the electronic control unit 305 carries out the controls described below.

The electronic control unit 305 is adapted to electronically control the rotation of the internal combustion engine 301; firstly, the on/off status of the motor is controlled; secondly, the rotation speed of the motor is controlled. If it is provided for the motor to rotate at a constant (or substantially constant) speed, the injection of fuel into the motor may also be controlled by a controller connected to or integrated within the electronic control unit.

The electronic control unit 305 is adapted to electronically control the electric energy supplied by the electric generator 312 to the electric accumulator 303; this is carried out by means of the control of converter 312. The electronic control unit 305 is adapted to electronically control the electric energy supplied by the electric accumulator 303 to the electric motor 304; this is carried out by means of the control of converter 314. By controlling converters 312 and 314, the flows of electric energy input and output from node 313 (the flow of electric energy output from node 313 and directed toward the electric use 309 depends mainly on manual controls from the vehicle operator) are also controlled; the flow associated with converter 312 is typically input; the flow associated with converter 314 may be input or output according to the conditions; the flow associated with accumulator 303 may be input or output according to the conditions.

The control of converter 312 serves mainly to show a proper impedance both to generator 302 and to node 313 as a function of the conditions; indeed, it is preferable for all the mechanical energy generated by motor 301 to be converted into electric energy and transferred to node 303.

The control of converter 314 serves mainly to control the speed of the vehicle which may be increased, kept constant, reduced; for this reason, the electronic control unit 305 is connected to the accelerator pedal 306 and to the brake pedal 307; the quantity and the direction are determined of the electric energy transferred from converter 314 according to the conditions of the pedals (pedals more or less pressed down on) and the movement conditions of the vehicle (more or less flat movement, more or less uphill movement, more or less downhill movement).

The electronic control unit 305 is adapted to electronically control the operation of the electric charger 308; for example, it may be provided for it to charge accumulator 303 only if motor 301 is switched off and the vehicle is stopped; typically, charger 308 is disabled when accumulator 303 is completely charged. Typically, the electronic control unit 305 carries out the controls described above based on rules preset therein.

The electronic control unit 305 is also adapted to monitor the charge status of accumulator 303; this is useful, for example, for avoiding an excessive charge and/or for avoiding an excessive exhaustion.

Typically, the electronic control unit 305 is arranged to maintain the internal combustion engine 301 at a "constant operating rotation speed" under operating conditions of the vehicle; naturally, small speed fluctuations may occur about such "constant operating rotation speed"; thereby, it is attempted to maximum the performance of the internal combustion engine and minimize the fuel consumption thereof under operating conditions of the vehicle; it is worth noting that such operating conditions of the vehicle may comprise, for example, when the vehicle moves while towing a loaded trolley and when the vehicle moves while towing an unloaded trolley and when the vehicle is stopped waiting for the trolley to be loaded or unloaded.

Alternatively, more sophisticated strategies may be provided for maximizing performance and minimizing consumption which could involve, for example, slow variations of the rotation speed or a plurality of constant rotation speeds; such strategies may also consider the time of the day: for example, when the end of the working day is near, the electric accumulator is no longer charged by means of the internal combustion engine.

According to a first possible strategy for reducing fuel consumption, the electronic control unit 305 is arranged to automatically switch-off the internal combustion engine 301 under predetermined conditions of the vehicle, for example when the electric accumulator 303 is completely charged.

According to a second possible strategy for reducing fuel consumption, the electronic control unit 305 is arranged to maintain the internal combustion engine 301 at a "constant idling rotation speed", less than the "constant operating rotation speed", under predetermined conditions of the vehicle, for example when the vehicle is stopped waiting for the trolley to be loaded or unloaded; the reduction of the speed of motor 301 could also be subordinate to the charge status of the electric accumulator 303.

Among other things, it is advantageous for the operator of the vehicle to be able to provide the electronic control unit 305 with manual commands for switching off and switching on the internal combustion engine 301; this may serve, for example, when the vehicle moves inside indoor places, in particular warehouses and/or ship holds.

Preferably, according to the present invention, the electric energy supplied to the electric motor 304 comprises a first part obtained from the electric generator and a second part obtained from said electric accumulator; the first part and the second part depending on the condition of the vehicle and therefore their ratio changes over time.

According to a preferred dimensioning of the vehicle propulsion system, the maximum of the second part of electric energy is higher than the maximum of the first part of electric energy; in particular, the maximum of the second part is higher than the maximum of the first part by a factor comprised between 2 and 5, preferably approximately equal to 3.

According to a preferred dimensioning of the vehicle propulsion system, the rated power of the electric motor is higher than the rated power of the internal combustion engine; in particular, the power of said electric one is higher than the power of the internal combustion one by a factor comprised between 2 and 5, and preferably approximately equal to 3; for example, the electric motor 304 may have a rated power of 170 kW and the internal combustion engine 301 of 55 kW.

The rated power of the electric motor could be approximately equal to the sum of the rated power of the internal combustion engine and of the rated power of the electric accumulator.

Naturally, the rated power of the electric motor is to be dimensioned as a function of the power that the vehicle requires to move while towing the trolley with the maximum load.

For example, the rated power of the electric accumulator may be dimensioned so that it is equal to the power required by the vehicle to move on a flat surface while towing the trolley with the maximum load; in this case, the further power required by the vehicle to move uphill is supplied by the internal combustion engine.

It is understood from the dimensionings indicated above that the vehicle obtains energy for its propulsion (especially when it tows a loaded trolley) directly and mainly from the electric accumulator 303 and the internal combustion engine 301 serves to charge the electric accumulator 303 slowly and constantly; this is the reason why typically the internal combustion engine is kept switched on, for example, also when the vehicle is stopped waiting for the trolley to be loaded or unloaded.

Under certain predetermined conditions, the electric accumulator 303 is charged by the electric motor 304, which operates as electric generator, under the control of the electronic control unit 305; this may occur, for example, when the vehicle is going downhill or when the brake pedal 307 is pressed; it is worth clarifying that, typically and for increased safety, the vehicle according to the present invention is also provided with a traditional type brake, that is operating by friction.

Below are certain possible scenarios of use of a vehicle that comprises the system in fig. 3.

When the load towed by the vehicle is medium or high and the vehicle moves on a flat surface with the internal combustion engine switched on, motor 304 receives almost all the electric energy corresponding to the sum of the electric energy supplied by converter 312 and a (more or less large) part of the maximum electric energy that can be supplied by accumulator 303.

When the load towed by the vehicle is medium or high and the vehicle moves uphill with the internal combustion engine switched on, motor 304 receives almost all the electric energy corresponding to the sum of the electric energy supplied by converter 312 and the maximum electric energy that can be supplied by accumulator 303.

When the load towed by the vehicle is low or zero and the vehicle moves on a flat surface with the internal combustion engine switched on, motor 304 receives almost all the electric energy supplied by converter 312; therefore, accumulator 303 maintains its charge substantially constant.

When the vehicle moves downhill or is in the braking step, both converter 312 and converter 314 supply electric energy to accumulator 303 and recharge it.

When the vehicle is stopped with the internal combustion engine switched on, converter 314 is not enabled and converter 312 supplies electric energy to accumulator 303 and recharges it.

When the vehicle moves with the internal combustion engine switched off, converter 312 is not enabled and converter 314 supplies the electric energy required by motor 304 due to the electric energy accumulated in accumulator 303. When the vehicle is stopped in recharging step, the motors 301 and 304 are switched off, the converters 312 and 314 are not enabled, accumulator 303 is charged by charger 308.

As already indicated, advantageously the electronic control unit 305 is arranged to operate according to rules preset in the unit.

These rules are generally set during manufacture of the vehicle, but they may be advantageously reset totally or partly by the retailer of the vehicle and/or by the end user to adapt the vehicle to the particular use of the end user; such a use depends firstly on the conformation and dimension of the port (see for example fig. 2) where the vehicle is to operate; such a use depends secondly on the routes expected for the vehicle in the port; all this requires a (more or less sophisticated) activity by the end user of "modelling" the use of the vehicle in the port. Advantageously, it may be provided for the electronic control unit 305 to be arranged to automatically modify one or more rules as a function of the operation of the vehicle; therefore it is a form of "automatic learning"; such an "automatic learning" may be carried out before the normal use of the vehicle in the port by the end user ("initial automatic learning") and/or during the normal use of the vehicle in the port by the end user ("constant automatic learning").

## Claims

1. Vehicle of the type adapted to couple to, lift in part from one side and tow a trolley for transporting goods in a port, provided with tyres and comprising:
- an internal combustion engine (301) provided with a rotating shaft,
- an electric generator (302) connected to said rotating shaft and adapted to generate at an output electric energy as a function of the rotation of said rotating shaft,
- an electric accumulator (303) having terminals connected to said output,
- at least one electric motor (304) connected to said terminals and provided with a rotating shaft connected to at least one of said tyres;
and further comprising an electronic control unit (305) connected to said internal combustion engine (301), to said electric generator (302), to said electric accumulator (303), and to said at least one electric motor (304), and adapted to electronically control:
- the rotation of said internal combustion engine (301),
- the electric energy supplied by said electric generator (302) to said electric accumulator (303),
- the electric energy supplied by said accumulator (303) to said at least one electric motor (304).

2. Vehicle according to claim 1, comprising an accelerator pedal (306) and/or a brake pedal (307), and wherein said electronic control unit (305) is connected to said accelerator pedal (306) and/or to said brake pedal (307).

3. Vehicle according to claim 1 or 2, wherein said electronic control unit (305) is arranged to maintain said internal combustion engine (301) at a constant operating rotation speed in operating conditions of the vehicle.

4. Vehicle according to claim 1 or 2 or 3, wherein said electronic control unit (305) is arranged to switch-off said internal combustion engine (301) in predetermined vehicle conditions.

5. Vehicle according to claim 3 and/or 4, wherein said electronic control unit (305) is arranged to maintain said internal combustion engine (301) at a constant idling rotation speed in predetermined conditions of the vehicle.

6. Vehicle according to any one of the preceding claims, wherein said electronic control unit (305) is arranged to control the electric energy supplied to said at least one electric motor (304) as a function of the position of an accelerator pedal (306) and of at least one rule preset in the unit (305).

7. Vehicle according to claim 6, wherein said electronic control unit (305) is arranged to control the electric energy supplied by said at least one electric motor (304) as a function of the position of a brake pedal (307) and of at least one rule preset in the unit (305).

8. Vehicle according to any one of the preceding claims, wherein said electronic control unit (305) is arranged to control the electric energy supplied to said at least one electric motor (304), a first part of said electric energy being obtained from said electric generator (302) and a second part of said electric energy being obtained from said electric accumulator (303), said first part and said second part depending on the condition of the vehicle.

9. Vehicle according to claim 8, wherein the maximum of said second part of electric energy is higher than the maximum of said first part of electric energy.

10. Vehicle according to claim 9, wherein the maximum of said second part of electric energy is higher than the maximum of said first part of electric energy by a factor comprised between 2 and 5, preferably approximately equal to 3.

11. Vehicle according to any one of the preceding claims, wherein the rated power of said electric motor (304) is higher than the rated power of said internal combustion engine (301).

12. Vehicle according to claim 11, wherein the rated power of said electric motor (304) is higher than the rated power of said internal combustion engine (301) by a factor comprised between 2 and 5, and preferably approximately equal to 3.

13. Vehicle according to any one of the preceding claims, wherein said at least one electric motor (304) is adapted to generate electric energy and supply it to said electric accumulator (303) under the control of said electronic control unit (305) in predetermined conditions of the vehicle.

14. Vehicle according to any one of the preceding claims, wherein said electronic control unit (305) is arranged to operate according to one or more rules, said one or more rules being preset in the unit (305).

15. Vehicle according to claim 14, wherein said electronic control unit (305) is arranged to receive partial resettings of said one or more rules.

16. Vehicle according to claim 14 or 15, wherein said electronic control unit (305) is arranged to automatically modify said one or more rules as a function of the actual operation of the vehicle.

17. Vehicle according to any one of the preceding claims, comprising:
- an electric input (310) for connecting to a source of electric energy external to the vehicle;
wherein said terminals of said electric accumulator (303) are also connected to said electric input (310);
wherein said electronic control unit (305) is also connected to said electric input (310) and is adapted to electronically control:
- the electric energy supplied by said electric input (310) to said electric accumulator (303).
